# EUROPEAN PATENT APPLICATION

(11) **EP 4 851 634 A1**
(43) Date of publication of application: **09.12.2026**
(21) Application number: 25748481.6
(22) Date of filing: 15.01.2025
(51) Int. Cl.: G01N 35/00, G06F 3/0481

(54) **AUTOMATIC ANALYSIS DEVICE, AUTOMATIC ANALYSIS SYSTEM, AND ANALYSIS INFORMATION SCREEN SWITCHING PROGRAM**

(30) Priority: 29.01.2024 JP 2024011145
(71) Applicant: Hitachi High-Tech Corporation, Minato-ku Tokyo 105-6409 (JP)
(72) Inventor: YOKOYAMA, Kohei, Tokyo 105-6409 (JP)
(74) Representative: MERH-IP Matias Erny Reichl Hoffmann Patentanwälte PartG mbB
(86) International application number: PCT/JP2025/000968
(87) International publication number: WO 2025/164301

(57) **Abstract**

An object of the invention is to provide an automatic analyzer that improves work efficiency of a user by switching to an appropriate screen at an appropriate timing. Therefore, the automatic analyzer includes: an analysis unit configured to perform analysis; a storage unit configured to store analysis information including an analysis result or a consumable status; a display unit configured to display the analysis information; an operation unit configured to receive an operation from a user; and a control unit configured to control the analysis unit, the storage unit, the display unit, and the operation unit, in which the storage unit stores a screen switching pattern including a plurality of screens related to the analysis information and a trigger condition serving as a trigger for the screen switching pattern, the screen switching pattern and the trigger condition being determined by the operation unit in advance, and when the trigger condition is satisfied, the control unit automatically starts switching of a screen to be displayed on the display unit according to the screen switching pattern stored in the storage unit regardless of the operation of the user on the operation unit.

## Description

### Technical Field

The present invention relates to an automatic analyzer, an automatic analysis system, and an analysis information screen switching program.

### Background Art

A user such as a laboratory technician who handles an automatic analyzer confirms information such as consumables and analysis results as a part of routine work. The information is confirmed using a display unit such as a display of the automatic analyzer, and when many screens are required to transition to desired information, time and efforts may increase and work efficiency of the user may decrease. Therefore, an automatic analyzer that displays a screen on which a user can easily confirm information is proposed. For example, PTL 1 discloses an automatic analyzer in which information selected from a plurality of types of information (specimen measurement information, alarm information, and maintenance information) is displayed in a constant display region of a screen, and an operator can grasp information by focusing only on the constant display region. Further, PTL 1 also discloses that, when there are a plurality of pieces of information to be displayed in the constant display region of the screen, the information can be automatically switched, and a switching interval can be set in three stages.

### Citation List

### Patent Literature

PTL 1: JP2010-249757A

### Summary of Invention

### Technical Problem

According to the technique disclosed in PTL 1, a predetermined type of information is merely switched at a predetermined time interval regardless of a status of a device or a user, and a screen display at that time may not be necessarily desirable.

An object of the invention is to provide an automatic analyzer and an automatic analysis system that improve work efficiency of a user by switching to an appropriate screen at an appropriate timing.

### Solution to Problem

In order to solve the above problem, the invention provides an automatic analyzer. The automatic analyzer includes: an analysis unit configured to perform analysis; a storage unit configured to store analysis information including an analysis result or a consumable status; a display unit configured to display the analysis information; an operation unit configured to receive an operation from a user; and a control unit configured to control the analysis unit, the storage unit, the display unit, and the operation unit, in which the storage unit stores a screen switching pattern including a plurality of screens related to the analysis information and a trigger condition serving as a trigger for the screen switching pattern, the screen switching pattern and the trigger condition being determined by the operation unit in advance, and the control unit automatically starts switching of a screen to be displayed on the display unit according to the screen switching pattern stored in the storage unit regardless of the operation of the user on the operation unit when the trigger condition is satisfied.

### Advantageous Effects of Invention

According to the invention, it is possible to provide an automatic analyzer and an automatic analysis system that improve work efficiency of a user by switching to an appropriate screen at an appropriate timing.

### Brief Description of Drawings

[FIG. 1] FIG. 1 is a schematic view showing an overall configuration of an automatic analyzer according to Embodiment 1.
[FIG. 2] FIG. 2 is a block diagram showing a functional configuration of an analyzer PC.
[FIG. 3] FIG. 3 is a view showing an example of manual switching of a screen displayed on a display unit.
[FIG. 4] FIG. 4 is a view showing a basic setting screen for automatic screen switching.
[FIG. 5] FIG. 5 is a flowchart showing automatic screen switching processing.
[FIG. 6] FIG. 6 shows an example of a detail setting screen of a screen switching pattern based on a system state (Embodiment 1).
[FIG. 7] FIG. 7 shows an example of transition of screens switched according to contents set in FIG. 6.
[FIG. 8] FIG. 8 shows an example of a detail setting screen of a screen switching pattern based on a specimen position (Embodiment 1).
[FIG. 9] FIG. 9 shows an example of transition of screens switched according to contents set in FIG. 8.
[FIG. 10] FIG. 10 shows an example of a detail setting screen of a screen switching pattern based on a user position (Embodiment 1).
[FIG. 11] FIG. 11 shows an example of transition of screens switched according to contents set in FIG. 10.
[FIG. 12] FIG. 12 shows an example of a detail setting screen of a screen switching pattern based on a trigger screen (Embodiment 1).
[FIG. 13] FIG. 13 shows an example of transition of screens switched according to contents set in FIG. 12.
[FIG. 14] FIG. 14 shows an example of a detail setting screen of a screen switching pattern based on a trigger time (Embodiment 1).
[FIG. 15] FIG. 15 shows an example of transition of screens switched according to contents set in FIG. 14.
[FIG. 16] FIG. 16 is a schematic diagram showing an overall configuration of an automatic analysis system according to Embodiment 2.
[FIG. 17] FIG. 17 shows an example of a detail setting screen of a screen switching pattern based on a system state (Embodiment 2).
[FIG. 18] FIG. 18 shows an example of a detail setting screen of a screen switching pattern based on a specimen position (Embodiment 2).
[FIG. 19] FIG. 19 shows an example of a detail setting screen of a screen switching pattern based on a user position (Embodiment 2).
[FIG. 20] FIG. 20 shows an example of a detail setting screen of a screen switching pattern based on a trigger screen (Embodiment 2).
[FIG. 21] FIG. 21 shows an example of a detail setting screen of a screen switching pattern based on a trigger time (Embodiment 2).

### Description of Embodiments

Hereinafter, embodiments of the invention will be described in detail with reference to the drawings.

### Embodiment 1

### <Configuration of Automatic analyzer>

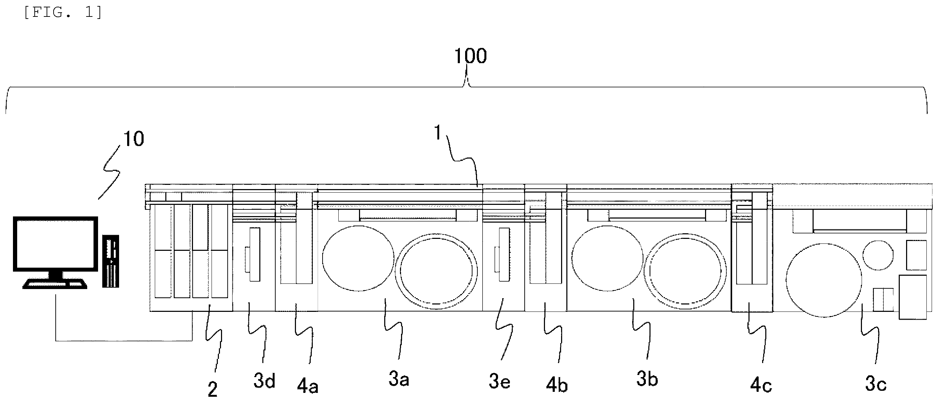

FIG. 1 is a schematic view showing an overall configuration of an automatic analyzer according to Embodiment 1. An automatic analyzer 100 includes a conveyance line 1, a sampler unit 2, a plurality of analysis modules 3 (analysis units), a plurality of buffers 4, and an analyzer PC 10. The conveyance line 1 conveys a rack on which a specimen is mounted. The sampler unit 2 is a unit that loads a rack on which a specimen before analysis is mounted and stores a rack on which a specimen after analysis is mounted. The analysis module 3 is a module that performs a biochemical analysis, an immune analysis, and the like, and in the example of FIG. 1, the analysis module 3 includes five analysis modules of a first analysis module 3a, a second analysis module 3b, a third analysis module 3c, a fourth analysis module 3d, and a fifth analysis module 3e. The buffer 4 is a place where the rack is temporarily on standby until the analysis of the specimen is performed, and in the example of FIG. 1, the buffer 4 includes three buffers of a first buffer 4a, a second buffer 4b, and a third buffer 4c. The first analysis module 3a and the second analysis module 3b are the analysis modules 3 of the same type, and are respectively coupled to the first buffer 4a and the second buffer 4b. The fourth analysis module 3d and the fifth analysis module 3e are the analysis modules 3 of the same type, and are respectively coupled to the first buffer 4a and the second buffer 4b. Further, the third analysis module 3c is coupled to the third buffer 4c.

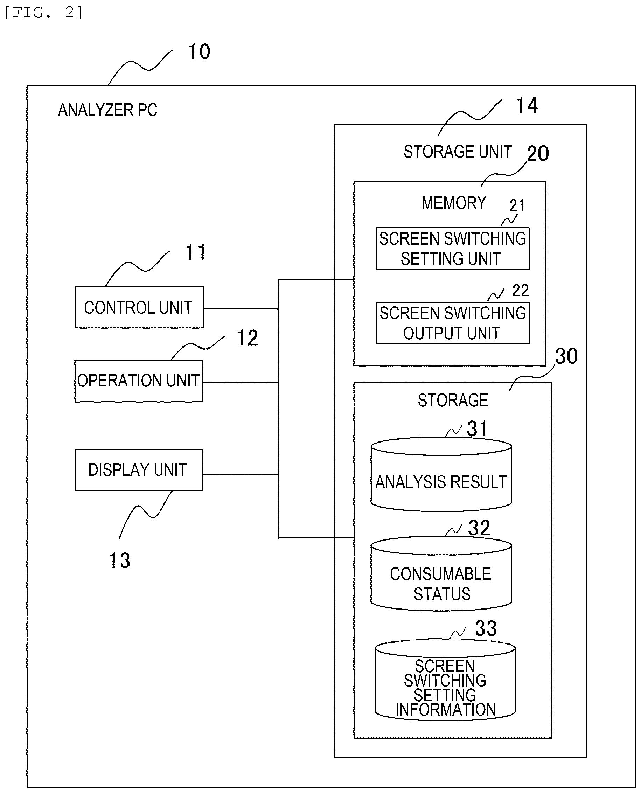

FIG. 2 is a block diagram showing a functional configuration of the analyzer PC. As shown in FIG. 2, the analyzer PC 10 includes a control unit 11, an operation unit 12, a display unit 13, and a storage unit 14. The control unit 11 is, for example, a CPU, and controls the operation unit 12, the display unit 13, and the storage unit 14. The control unit 11 is coupled to each mechanism of the analysis unit via an interface, controls an operation of each mechanism, performs a predetermined calculation using a measurement value received from each analysis unit, and obtains an analysis result. The display unit 13 is, for example, a liquid crystal display, and displays analysis information including an analysis result and a consumable status (such as a remaining amount of a reagent) to a user. The operation unit 12 is a keyboard, a mouse, or the like that receives an operation from a user, and causes a mouse cursor to press down a button to display various operation screens displayed on the display unit 13, for example, clicking of a mouse or the like, inputting of numbers or characters from a keyboard to an input frame, or the like. The storage unit 14 includes a memory 20 and a storage 30.

The memory 20 conceptually stores programs corresponding to functions implemented by the control unit 11 as a screen switching setting unit 21 and a screen switching output unit 22. The screen switching setting unit 21 sets a screen switching pattern including a plurality of screens related to the analysis information, a trigger condition that triggers the screen switching pattern, a lock time, and the like, and details thereof will be described later. When the trigger condition set by the screen switching setting unit 21 is satisfied, the screen switching output unit 22 switches a screen according to the screen switching pattern set by the screen switching setting unit 21 and outputs the switched screen to the display unit 13, and details thereof will be described later. Although not shown, the memory 20 stores programs for an operation control unit that controls an operation of each mechanism, a measurement value calculation unit that calculates an analysis result using a measurement value, and the like.

Here, the program may be provided by being incorporated in advance in a ROM or the like, or may be provided by being recorded or distributed in a computer-readable recording medium such as a CD-ROM in an installable or executable file format. Further, the program may be stored on a computer coupled to a network such as the Internet, and provided or distributed by being downloaded via the network.

The storage 30 stores an analysis result 31, a consumable status 32, screen switching setting information 33, and the like. The screen switching setting information 33 stores a screen switching pattern set by the screen switching setting unit 21, a trigger condition of the screen switching pattern, and the like.

A screen displayed on the display unit 13 of the analyzer PC 10 will be described below in the present embodiment, but when a mobile terminal carried by a user is communicably coupled to the analyzer PC 10 via a network or the like, the same processing can be applied to a screen displayed on a display unit of the mobile terminal. In this case, programs such as the screen switching setting unit 21 and the screen switching output unit 22 described above are installed in the mobile terminal, and an application for displaying analysis information of the automatic analyzer is executed on the mobile terminal.

### <Manual Screen Switching>

When a user performs a predetermined operation using the operation unit to confirm analysis information of the automatic analyzer, the control unit causes the display unit to output a confirmation screen. Further, when the user selects predetermined information while viewing the confirmation screen, the control unit causes the display unit to output details of the selected information.

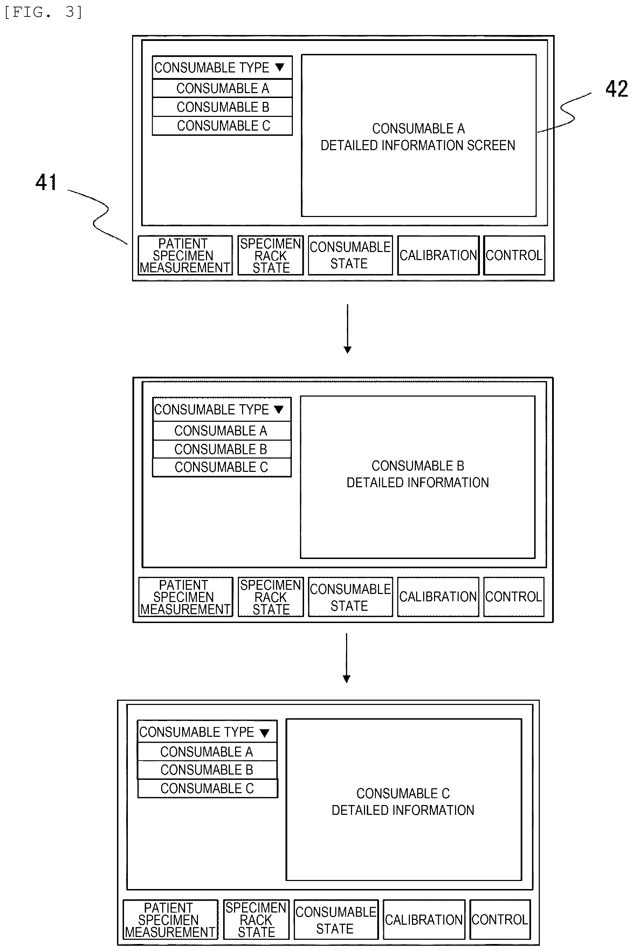

FIG. 3 is a view showing an example of manual switching of a screen displayed on the display unit. As shown in FIG. 3, the confirmation screen includes a specific display region 42 that is a screen switching target, and a basic display region 41 that is a screen that does not change even when the screen of the specific display region 42 is switched. The example of FIG. 3 shows a state in which a consumable type is switched by tab in a state where a "consumable state" is selected from a plurality of pieces of analysis information displayed in the basic display region 41. In an upper part of FIG. 3, a consumable A is selected by tab and detailed information of the consumable A is displayed in the specific display region 42, in a middle part of FIG. 3, a consumable B is selected by tab and detailed information of the consumable B is displayed in the specific display region 42, and in a lower part of FIG. 3, a consumable C is selected by tab and detailed information of the consumable C is displayed in the specific display region 42.

In this manner, the user can manually switch the screen of the specific display region 42 by operating the operation unit 12. However, depending on a user who has many routine tasks, the work of manually switching the screen costs time and efforts, and the work efficiency may be reduced. Therefore, in the automatic analyzer according to the present embodiment, a function of automatically switching to an appropriate screen at an appropriate timing is added. In a case where an automatic screen switching function is turned on, when a predetermined trigger condition is satisfied, the control unit 11 automatically starts switching a screen displayed on the display unit 13 according to a screen switching pattern stored in the storage unit 14 regardless of an operation on the operation unit 12 by the user. After the screen switching is started, when a predetermined operation (for example, clicking of the screen) is performed by the operation unit 12, a screen displayed at that time is fixed (locked), and when a predetermined lock time elapses, the screen switching is resumed.

### <Basic Setting of Automatic Screen Switching>

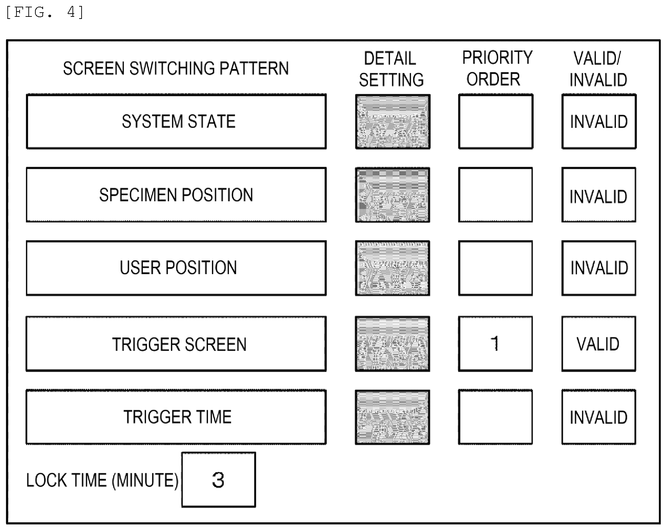

First, basic setting of the automatic screen switching function will be described. FIG. 4 is a view showing a basic setting screen for automatic screen switching. In the present embodiment, switching based on a system state, switching based on a specimen position, switching based on a user position, switching based on a trigger screen, and switching based on a trigger time can be set as a screen switching pattern as shown in FIG. 4. When details such as a plurality of screens to be displayed, an order of displaying screens, a switching time of each screen, and a trigger condition serving as a trigger of a pattern are set for each screen switching pattern, the user taps a detail setting button of a corresponding screen switching pattern. In addition, the user can set whether a screen switching pattern is valid or invalid, and can designate a priority order for a screen switching pattern. Only a screen switching pattern based on a trigger screen is valid and only one priority order is designated in the example of FIG. 4, but the priority order may be designated for all screen switching patterns regardless of whether a screen switching pattern is valid or invalid. The basic setting screen in FIG. 4 is also provided with a field for inputting a lock time, and the lock time is set to 3 minutes in the example of FIG. 4.

### <Basic Processing of Automatic Screen Switching>

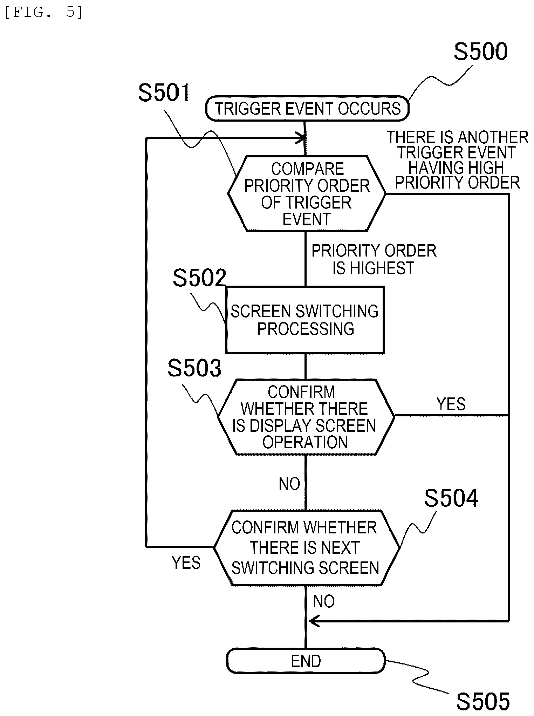

Next, basic processing of automatic screen switching will be described. FIG. 5 is a flowchart showing automatic screen switching processing. First, when an event satisfying a trigger condition (hereinafter, referred to as a trigger event) occurs in a screen switching pattern set to be valid in FIG. 4 (step S500), the control unit 11 (screen switching output unit 22) compares a priority order of the trigger event according to a priority order set in FIG. 4 (step S501). When there is another trigger event having a high priority order, the screen switching output unit 22 ends the screen switching (step S505). On the other hand, when the priority order of the trigger event is the highest, the screen switching output unit 22 executes screen switching processing according to detail setting (step S502). Thereafter, the screen switching output unit 22 confirms whether there is a display screen operation (step S503). When a user performs a screen operation (here, an operation of releasing the automatic screen switching instead of clicking or the like for temporary screen lock), the processing proceeds to step S505 described above, and the screen switching output unit 22 ends the screen switching. On the other hand, when the user does not perform a screen operation, the screen switching output unit 22 confirms whether there is a next switching screen according to the detail setting (step S504). When there is no next switching screen, the processing proceeds to step S505 described above, and the screen switching output unit 22 ends the screen switching. On the other hand, when there is a next switching screen, the processing proceeds to step S501 described above, and the same processing is executed. In the case of screen switching based on a system state or screen switching based on a user position, or in the case where a last screen is already displayed by performing screen switching based on a trigger screen, it is determined in step S504 that there is no next switching screen. On the other hand, in the case of screen switching based on a trigger time, since a plurality of screens to be displayed are switched in a loop, even when a last screen is already displayed, it is determined in step S504 that there is a next switching screen.

### <Screen Switching Pattern Based on System State>

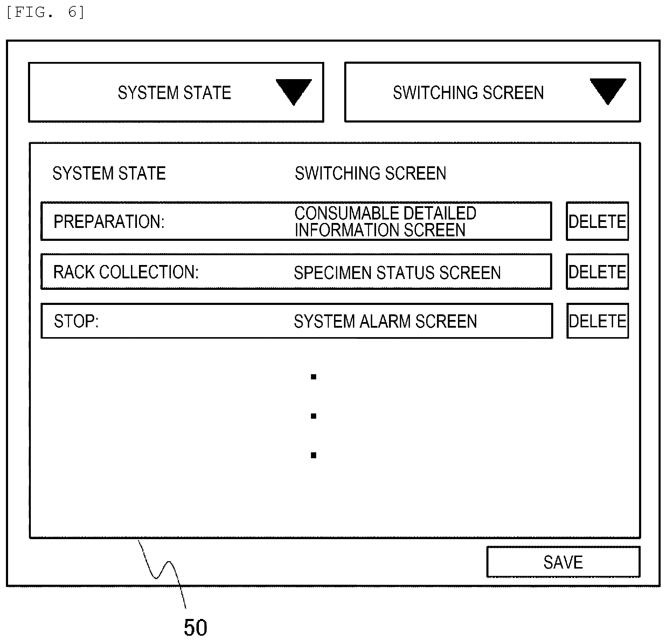

FIG. 6 shows an example of a detail setting screen of a screen switching pattern based on a system state (Embodiment 1). The detail setting screen in FIG. 6 is a screen that the control unit 11 (screen switching setting unit 21) causes the display unit 13 to output when a detail setting button of a screen switching pattern based on a system state in FIG. 4 is tapped. On the detail setting screen shown in FIG. 6, when a tab of a system state is tapped, a plurality of candidates are displayed, and a system state serving as a trigger for screen switching can be set by selecting a predetermined system state from the candidates. On the other hand, when a tab of a switching screen is tapped, a plurality of candidates are displayed, and a screen to be displayed in response to the trigger can be set by selecting a predetermined screen from the candidates. In the example of FIG. 6, it can be seen that a result of selecting "preparation" as a system state and selecting a "consumable detailed information screen" as a switching screen is listed as first setting in a setting completion list 50. In addition, it can be seen that a result of selecting "rack collection" as a system state and selecting a "specimen status screen" as a switching screen is listed as second setting in the setting completion list 50. Further, it can be seen that a result of selecting "stop" as a system state and selecting a "system alarm screen" as a switching screen is listed as third setting in the setting completion list 50. Each setting of the setting completion list 50 is provided with a delete button, and when the delete button is tapped, the screen switching setting unit 21 deletes corresponding setting. Contents set on the detail setting screen in FIG. 6 are stored in the storage unit as screen switching setting information by tapping a save button.

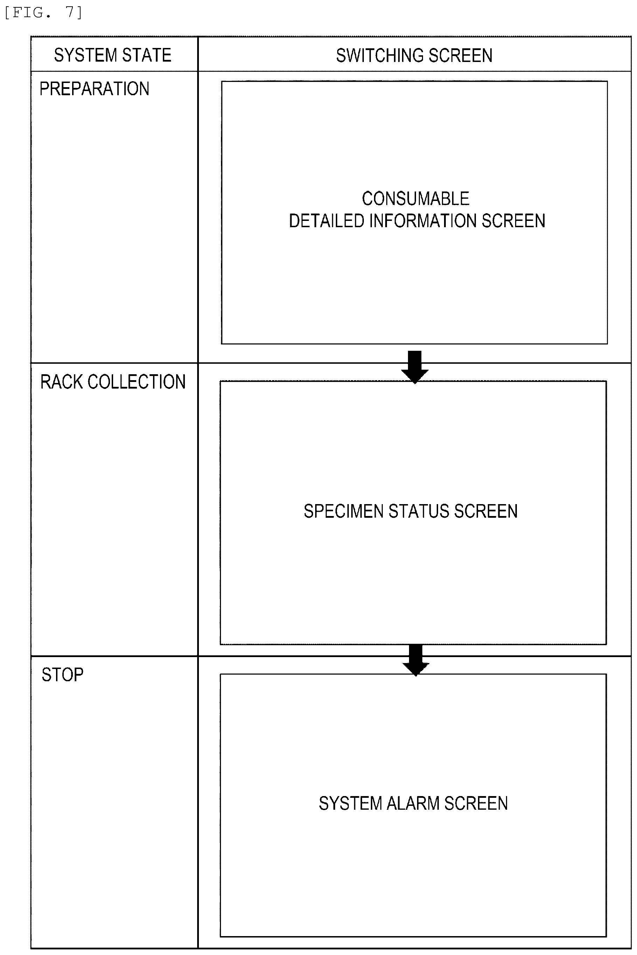

FIG. 7 shows an example of transition of screens switched according to the contents set in FIG. 6. As shown in FIG. 7, first, the screen switching output unit 22 refers to the screen switching setting information 33 in the storage unit 14 and causes the display unit 13 to output a consumable detailed information screen in response to a preparation state of the automatic analyzer. Next, the screen switching output unit 22 refers to the screen switching setting information 33 in the storage unit 14 and causes the display unit to output a specimen status screen in response to a rack collection state of the automatic analyzer. Thereafter, the screen switching output unit 22 refers to the screen switching setting information 33 in the storage unit 14 and causes the display unit 13 to output a system alarm screen in response to a stop state of the automatic analyzer.

### <Screen Switching Pattern Based on Specimen Position>

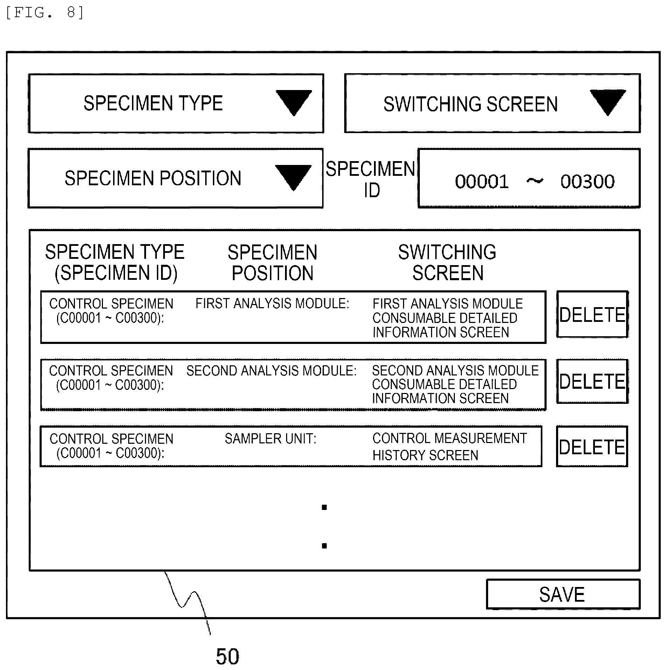

FIG. 8 shows an example of a detail setting screen of a screen switching pattern based on a specimen position (Embodiment 1).

The detail setting screen in FIG. 8 is a screen that the control unit 11 (screen switching setting unit 21) causes the display unit 13 to output when a detail setting button of a screen switching pattern based on a specimen position in FIG. 4 is tapped. On the detail setting screen shown in FIG. 8, a trigger condition of screen switching can be set by selecting a predetermined specimen type from a plurality of candidates displayed by tapping a tab of a specimen type, and selecting a predetermined specimen position from a plurality of candidates displayed by tapping a tab of a specimen position. The trigger condition may be further narrowed down by designating not only a specimen type but also a specimen ID of a specific specimen. On the other hand, when a tab of a switching screen is tapped, a plurality of candidates are displayed, and a screen to be displayed in response to the trigger condition can be set by selecting a predetermined screen from the candidates. In the example of FIG. 8, it can be seen that a result of selecting "control specimens (C00001 to C00300)" as a specimen type (specimen ID), selecting a "first analysis module" as a specimen position, and selecting a "first analysis module consumable detailed information screen" as a switching screen is listed as first setting in the setting completion list 50. It can be seen that a result of selecting "control specimens (C00001 to C00300)" as a specimen type (specimen ID), selecting a "second analysis module" as a specimen position, and selecting a "second analysis module consumable detailed information screen" as a switching screen is listed as second setting in the setting completion list 50. Further, it can be seen that a result of selecting "control specimens (C00001 to C00300)" as a specimen type (specimen ID), selecting a "sampler unit" as a specimen position, and selecting a "control measurement history screen" as a switching screen is listed as third setting in the setting completion list 50. Each setting of the setting completion list 50 is provided with a delete button, and when the delete button is tapped, the screen switching setting unit 21 deletes corresponding setting. Contents set on the detail setting screen in FIG. 8 are stored in the storage unit 14 as the screen switching setting information 33 by tapping a save button.

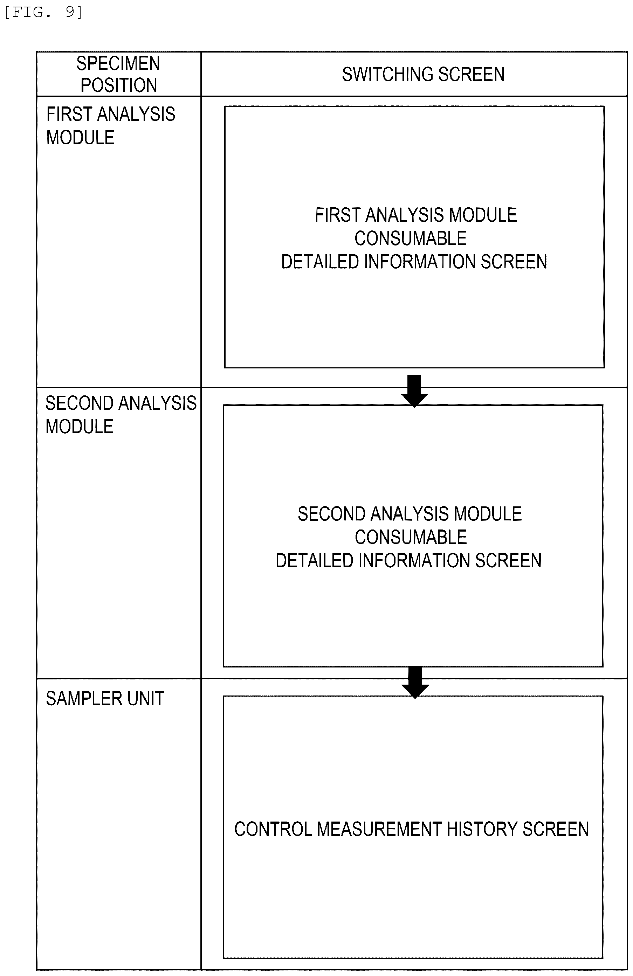

FIG. 9 shows an example of transition of screens switched according to contents set in FIG. 8. As shown in FIG. 9, first, the screen switching output unit 22 refers to the screen switching setting information 33 in the storage unit 14 and causes the display unit 13 to output the first analysis module consumable detailed information screen in response to a movement of a specimen of a predetermined specimen type (specimen ID) to a position of the first analysis module. Next, the screen switching output unit 22 refers to the screen switching setting information 33 in the storage unit 14 and causes the display unit 13 to output the second analysis module consumable detailed information screen in response to a movement of a specimen of a predetermined specimen type (specimen ID) to a position of the second analysis module. Thereafter, the screen switching output unit 22 refers to the screen switching setting information 33 in the storage unit 14 and causes the display unit 13 to output the control measurement history screen in response to a movement of a specimen of a predetermined specimen type (specimen ID) to a position of the sampler unit.

### <Screen Switching Pattern Based on User Position>

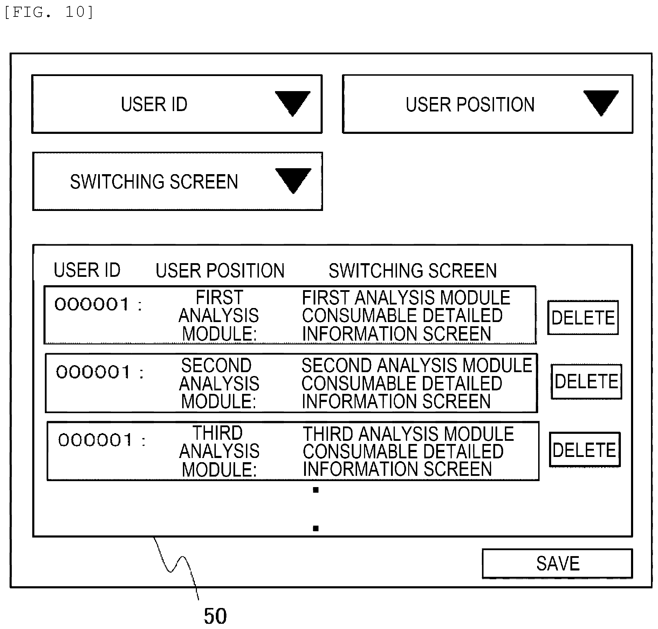

FIG. 10 shows an example of a detail setting screen of a screen switching pattern based on a user position (Embodiment 1). The detail setting screen in FIG. 10 is a screen that the control unit 11 (screen switching setting unit 21) causes the display unit 13 to output when a detail setting button of a screen switching pattern based on a user position in FIG. 4 is tapped. In the detail setting screen shown in FIG. 10, a trigger condition for screen switching can be set by selecting a predetermined user ID from a plurality of candidates displayed by tapping a tab of a user ID, and selecting a predetermined user position from a plurality of candidates displayed by tapping a tab of a user position. On the other hand, when a tab of a switching screen is tapped, a plurality of candidates are displayed, and a screen to be displayed in response to the trigger condition can be set by selecting a predetermined screen from the candidates. In the example of FIG. 10, it can be seen that a result of selecting "000001" as a user ID, selecting a "first analysis module" as a user position, and selecting a "first analysis module consumable detailed information screen" as a switching screen is listed as first setting in the setting completion list 50. It can be seen that a result of selecting "000001" as a user ID, selecting a "second analysis module" as a user position, and selecting a "second analysis module consumable detailed information screen" as a switching screen is listed as second setting in the setting completion list 50. Further, it can be seen that a result of selecting "000001" as a user ID, selecting a "third analysis module" as a user position, and selecting a "third analysis module consumable detailed information screen" as a switching screen is listed as third setting in the setting completion list 50. Each setting of the setting completion list 50 is provided with a delete button, and when the delete button is tapped, the screen switching setting unit 21 deletes corresponding setting. Contents set on the detail setting screen in FIG. 10 are stored in the storage unit 14 as the screen switching setting information 33 by tapping a save button.

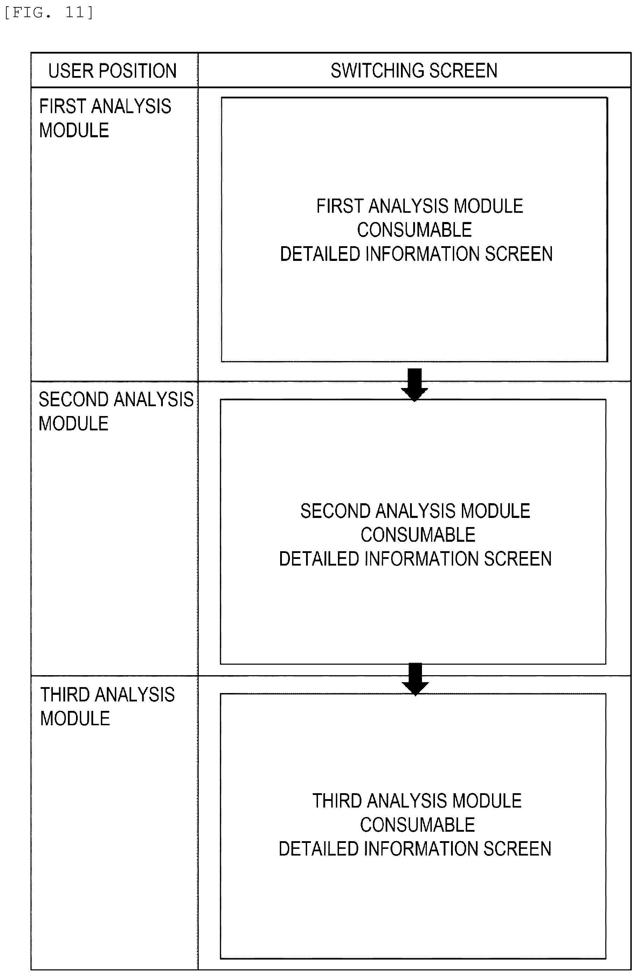

FIG. 11 shows an example of transition of screens switched according to contents set in FIG. 10. As shown in FIG. 11, first, the screen switching output unit 22 refers to the screen switching setting information 33 in the storage unit 14 and causes the display unit 13 to output the first analysis module consumable detailed information screen in response to a movement of a user having a predetermined ID to the front of the first analysis module. Next, the screen switching output unit 22 refers to the screen switching setting information 33 in the storage unit 14 and causes the display unit 13 to output the second analysis module consumable detailed information screen in response to a movement of a user having a predetermined ID to the front of the second analysis module. Thereafter, the screen switching output unit 22 refers to the screen switching setting information 33 in the storage unit 14 and causes the display unit 13 to output the third analysis module consumable detailed information screen in response to a movement of a user having a predetermined ID to the front of the third analysis module.

Whether the user moved to a predetermined position is detected by a user detection unit such as a sensor or a camera installed in the automatic analyzer. The user ID may be determined by a sensor reading an identification medium carried by the user, or may be determined by image analysis by a camera. When an output destination of screen switching is a mobile terminal carried by the user, the user ID may be specified in association with the mobile terminal.

### <Screen Switching Pattern Based on Trigger Screen>

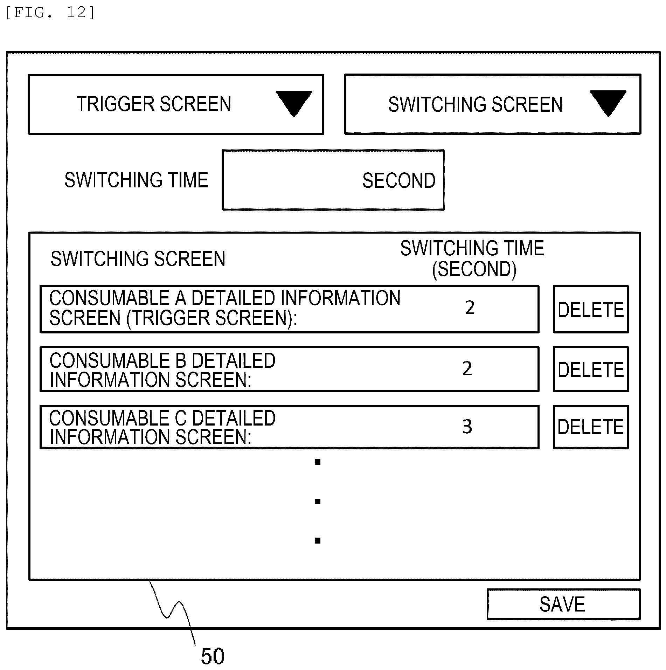

FIG. 12 shows an example of a detail setting screen of a screen switching pattern based on a trigger screen (Embodiment 1). The detail setting screen of FIG. 12 is a screen that the control unit 11 (screen switching setting unit 21) causes the display unit 13 to output when a detail setting button of a screen switching pattern based on a trigger screen in FIG. 4 is tapped. On the detail setting screen shown in FIG. 12, screen switching when a trigger screen is displayed can be started by selecting a predetermined trigger screen from a plurality of candidates displayed by tapping a tab of a trigger screen. On the other hand, when a tab of a switching screen is tapped, a plurality of candidates are displayed, and a switching screen to be displayed next to the trigger screen can be set by selecting a predetermined screen from the candidates. It is also possible to input a desired time as a switching time up to when the screen is switched to the switching screen. For example, when a "consumable A detailed information screen" is set as a trigger screen, a "consumable B detailed information screen" is set as a switching screen, and "2 seconds" are set as a switching time, the "consumable A detailed information screen" and the "consumable B detailed information screen" are listed as first and second setting in the setting completion list 50, and "2 seconds" are set as a switching time of the "consumable A detailed information screen". Thereafter, when the "consumable A detailed information screen" is set as a trigger screen, a "consumable C detailed information screen" is set as a switching screen, and "2 seconds" are set as a switching time, the "consumable C detailed information screen" is listed as third setting in the setting completion list 50, and "2 seconds" are set as a switching time of the "consumable B detailed information screen". Each setting of the setting completion list 50 is provided with a delete button, and when the delete button is tapped, the screen switching setting unit 21 deletes corresponding setting. Contents set on the detail setting screen in FIG. 12 are stored in the storage unit 14 as the screen switching setting information 33 by tapping a save button.

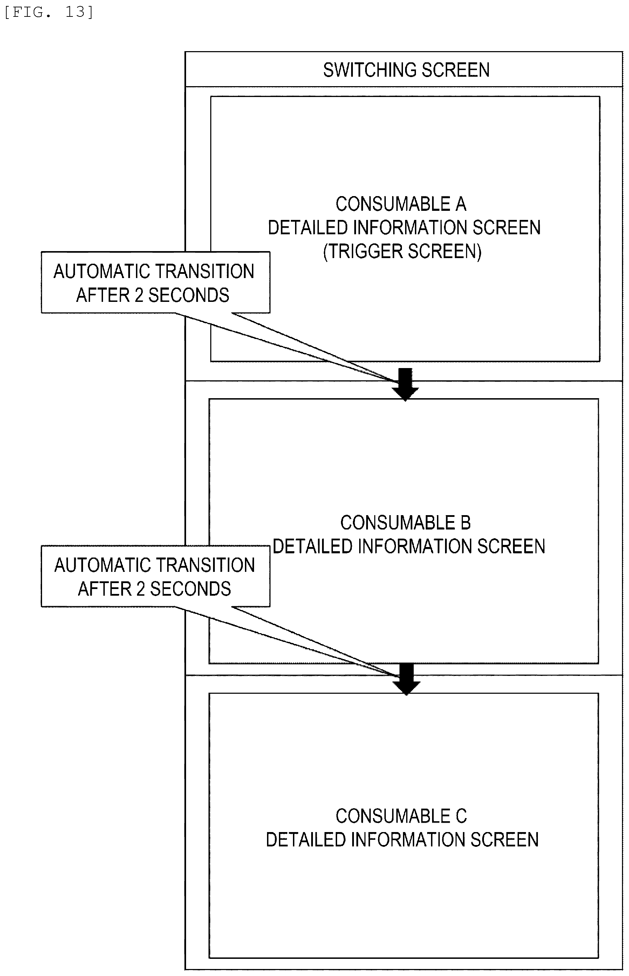

FIG. 13 shows an example of transition of screens switched according to contents set in FIG. 12. As shown in FIG. 13, first, in response to the display of the consumable A detailed information screen set as the trigger screen, the screen switching output unit 22 refers to the screen switching setting information 33 in the storage unit 14, and after two seconds from the display of the screen, the screen switching output unit 22 causes the display unit 13 to output the consumable B detailed information screen.

Thereafter, the screen switching output unit 22 causes the display unit 13 to output the consumable C detailed information screen two seconds after the display of the consumable B detailed information screen. When there is another screen set as a switching screen, the same screen switching is performed thereafter, and when a final set screen is displayed, the screen switching ends.

### <Screen Switching Pattern Based on Trigger Time>

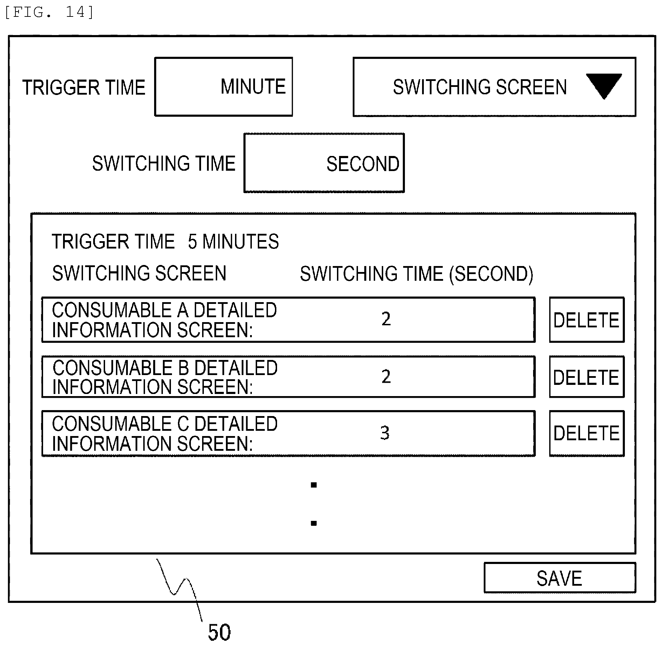

FIG. 14 shows an example of a detail setting screen of a screen switching pattern based on a trigger time (Embodiment 1). The detail setting screen in FIG. 14 is a screen that the control unit 11 (screen switching setting unit 21) causes the display unit 13 to output when a detail setting button of a screen switching pattern based on a trigger time in FIG. 4 is tapped. On the detail setting screen shown in FIG. 14, by inputting a predetermined time in a field of a trigger time, screen switching can be started when there is no operation on the operation unit 12 for the trigger time or more. On the other hand, when a tab of a switching screen is tapped, a plurality of candidates are displayed, and a switching screen to be displayed after the elapse of the trigger time can be set by selecting a predetermined screen from the candidates. It is also possible to set a desired time for the switching time from the switching screen to a next switching screen. For example, when "5 minutes" is set as a trigger time, a "consumable A detailed information screen" is set as a switching screen, and "2 seconds" are set as a switching time, the "consumable A detailed information screen" is listed as first setting in the setting completion list 50, and "2 seconds" are set as a switching time. Thereafter, when a "consumable B detailed information screen" is set as a switching screen and "2 seconds" are set as a switching time, the "consumable B detailed information screen" is listed as second setting in the setting completion list 50, and "2 seconds" are set as a switching time.

Next, when a "consumable C detailed information screen" is set as a switching screen and "3 seconds" are set as a switching time, the "consumable C detailed information screen" is listed as third setting in the setting completion list 50, and "3 seconds" are set as a switching time. Each setting of the setting completion list 50 is provided with a delete button, and when the delete button is tapped, the screen switching setting unit 21 deletes corresponding setting. Contents set on the detail setting screen in FIG. 14 are stored in the storage unit 14 as the screen switching setting information 33 by tapping a save button.

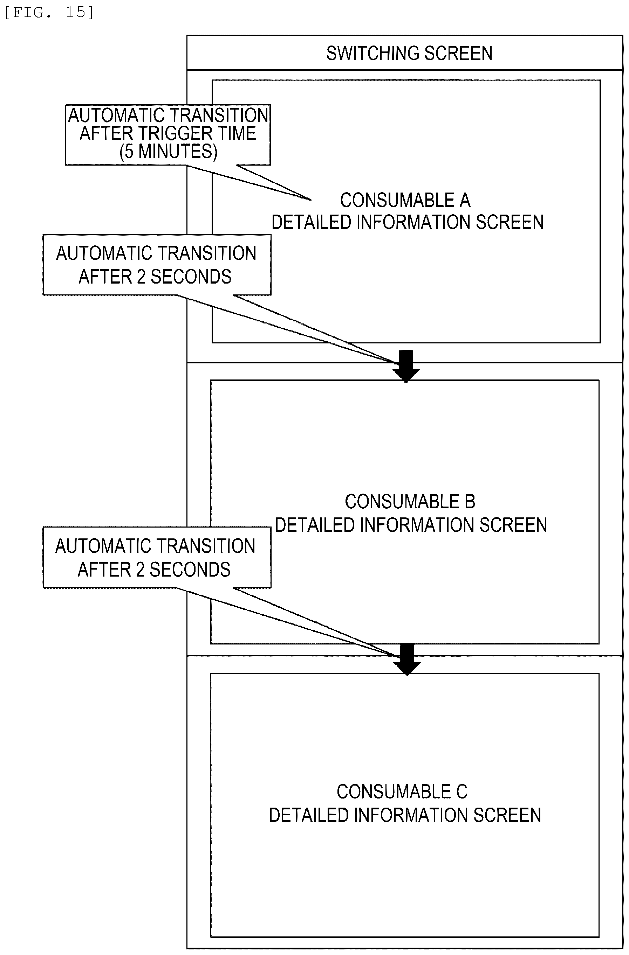

FIG. 15 shows an example of transition of screens switched according to contents set in FIG. 14. As shown in FIG. 15, first, the screen switching output unit 22 refers to the screen switching setting information 33 in the storage unit 14 and causes the display unit 13 to output the consumable A detailed information screen in response to no operation on the operation unit 12 for five minutes or more with five minutes being set as a trigger time. After two seconds from the display of the consumable A detailed information screen, the screen switching output unit 22 causes the display unit 13 to output the consumable B detailed information screen. After two seconds from the display of the consumable B detailed information screen, the screen switching output unit 22 causes the display unit 13 to output the consumable C detailed information screen. Here, when there is a screen set as a switching screen next to the consumable C detailed information screen, the screen switching output unit 22 similarly performs switching to the next screen after three seconds from the display of the consumable C detailed information screen. On the other hand, when the consumable C detailed information screen is a last set screen, after three seconds from the display of the consumable C detailed information screen, the screen switching output unit 22 again outputs the consumable A detailed information screen which is the first set screen, and loops the screen switching.

As described above, according to the present embodiment, even when a user does not manually operate a screen, the screen is automatically switched to an appropriate screen at an appropriate timing, and thus the work efficiency of the user is improved. The switching screens shown in FIGS. 7, 9, 11, 13, and 15 may be displayed in a manner of occupying the entire screen of the display unit 13 or may be displayed in a manner of occupying a part of the entire screen corresponding to the specific display region 42 in FIG. 3. However, it is desirable to make it easier for the user to confirm analysis information by setting the specific display region 42 which is a screen switching target to be larger than the basic display region 41 which is not a screen switching target.

### Embodiment 2

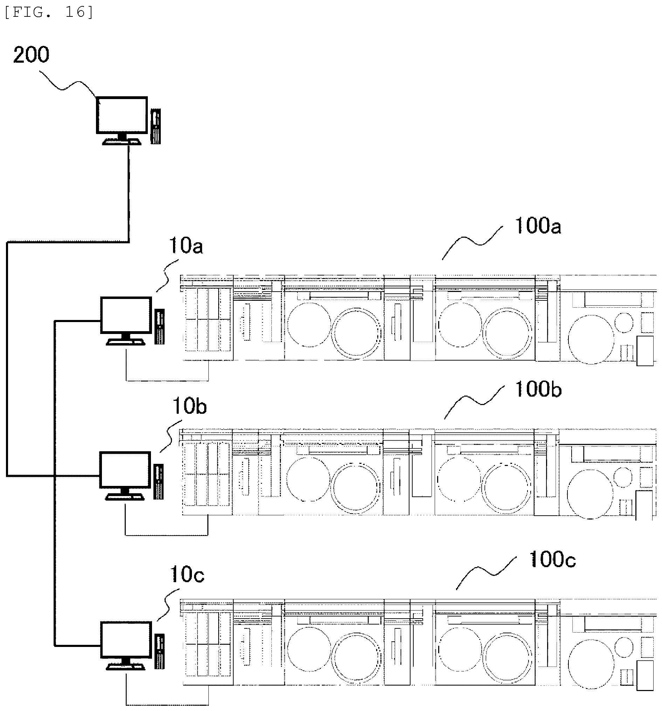

Embodiment 2 relates to an automatic analysis system in which a plurality of automatic analyzers are communicably coupled to a terminal device for overall management, and it is assumed that the system is a system adopted in a large-scale clinical test facility or the like that needs to test a large number of specimens. FIG. 16 is a schematic diagram showing an overall configuration of an automatic analysis system according to Embodiment 2. As shown in FIG. 16, the automatic analysis system includes a plurality of the automatic analyzers 100 (a first automatic analyzer 100a, a second automatic analyzer 100b, and a third automatic analyzer 100c) and a terminal device 200 (information management PC), and the analyzer PC 10 of each automatic analyzer is communicably coupled to the terminal device 200.

Similar to the analyzer PC in Embodiment 1, the terminal device 200 includes a control unit, a storage unit, a display unit, and an operation unit (not shown). The control unit is, for example, a CPU, and controls the storage unit, the display unit, and the operation unit. In addition, the control unit stores analysis information (analysis result, consumable status, alarm, and the like) received from each analyzer PC in the storage unit, and executes a function by reading a program stored in the storage unit. The storage unit includes a memory and a storage. The memory stores programs corresponding to functions executed by the control unit as a screen switching setting unit and a screen switching output unit. Roles of the screen switching setting unit and the screen switching output unit are the same as those in Embodiment 1. The storage stores analysis information of each automatic analyzer, screen switching setting information, and the like. The display unit is, for example, a liquid crystal display, and displays the analysis information for a user. The operation unit is, for example, a keyboard or a mouse.

The terminal device 200 is installed in a place different from the automatic analyzers, and the user is a supervisor or the like who gives an instruction to an operator in front of each automatic analyzer. Since the terminal device 200 automatically switches to an appropriate screen at an appropriate timing even when the supervisor or the like does not manually operate the screen, analysis information can be efficiently confirmed even in a large-scale clinical test facility.

Therefore, a screen which is a screen switching target and a trigger condition can be set for each analyzer in Embodiment 2.

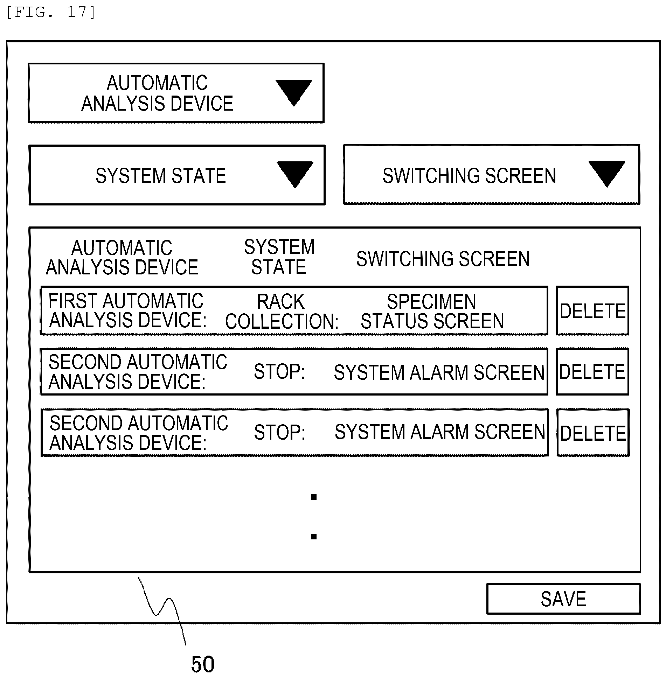

FIG. 17 shows an example of a detail setting screen of a screen switching pattern based on a system state (Embodiment 2). In FIG. 17, a system state serving as a trigger for screen switching can be set for each automatic analyzer, and a screen to be displayed in response to the trigger can be set for each automatic analyzer, which is different from Embodiment 1 shown in FIG. 6. Although a tab for selecting an automatic analyzer is provided in FIG. 17, a target automatic analyzer may be selected from a tab for a system state or a tab for a switching screen.

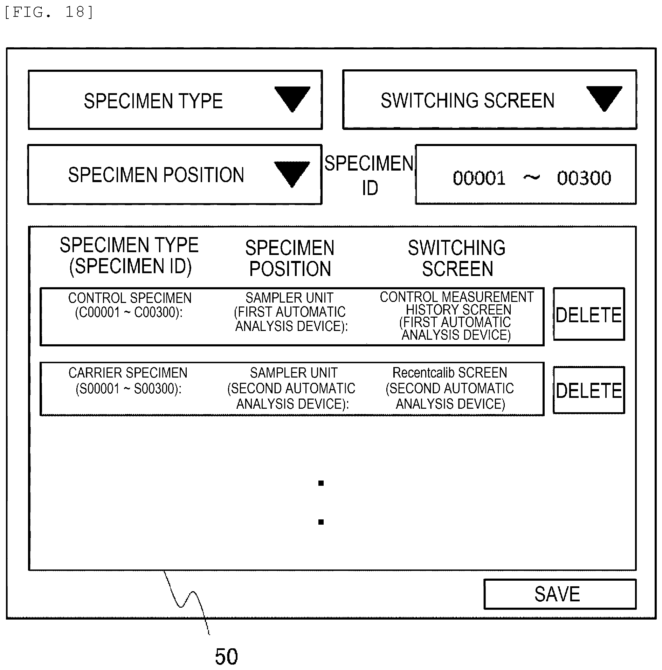

FIG. 18 shows an example of a detail setting screen of a screen switching pattern based on a specimen position (Embodiment 2). In FIG. 18, a specimen position which is a trigger condition for screen switching can be set for each automatic analyzer, and a screen to be displayed in response to the trigger condition can be set for each automatic analyzer, which is different from Embodiment 1 shown in FIG. 8.

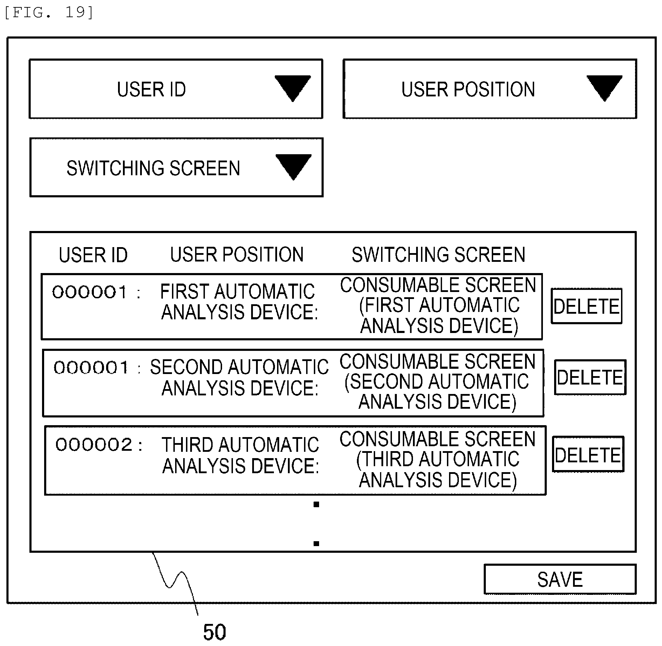

FIG. 19 shows an example of a detail setting screen of a screen switching pattern based on a user position (Embodiment 2). In FIG. 19, a user position which is a trigger condition for screen switching can be set for each automatic analyzer, and a screen to be displayed in response to the trigger condition can be set for each automatic analyzer, which is different from Embodiment 1 shown in FIG. 10.

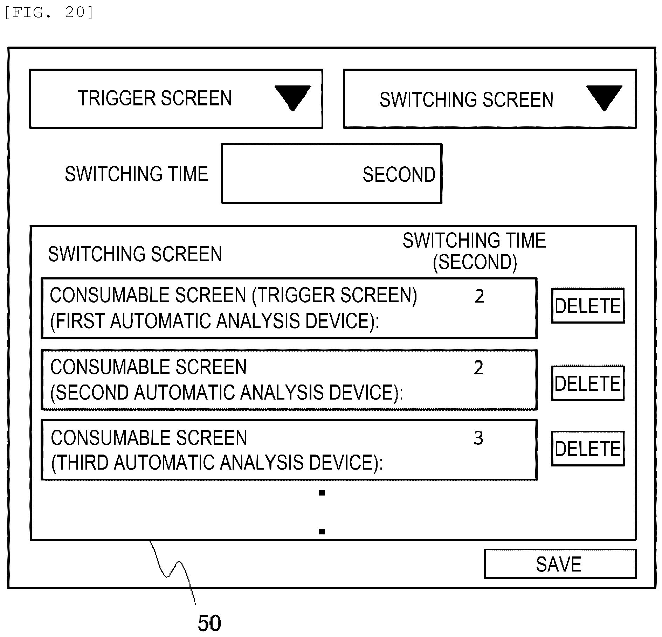

FIG. 20 shows an example of a detail setting screen of a screen switching pattern based on a trigger screen (Embodiment 2). In FIG. 20, a trigger screen that is a trigger condition for screen switching can be set for each automatic analyzer, and a screen to be displayed after the trigger screen can be set for each automatic analyzer, which is different from Embodiment 1 shown in FIG. 12.

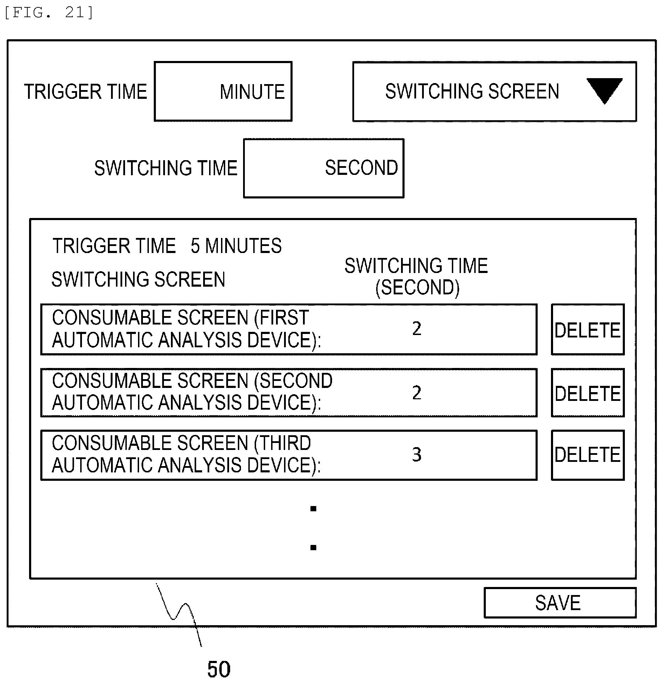

FIG. 21 shows an example of a detail setting screen of a screen switching pattern based on a trigger time (Embodiment 2). In FIG. 21, a screen to be displayed after a trigger time can be set for each automatic analyzer, which is different from Embodiment 1 shown in FIG. 14.

The above embodiments have been described in detail to facilitate understanding of the invention, and the invention is not necessarily limited to those including all the configurations described above. A part of a configuration of a certain embodiment can be replaced with a configuration of another embodiment, and the configuration of another embodiment can be added to the configuration of a certain embodiment. Further, a part of a configuration in each embodiment can also be added to, deleted from, or replaced with another configuration.

### Reference Signs List

1: conveyance line
2: sampler unit
3: analysis module
3a: first analysis module
3b: second analysis module
3c: third analysis module
3d: fourth analysis module
3e: fifth analysis module
4: buffer
4a: first buffer
4b: second buffer
4c: third buffer
10: analyzer PC
11: control unit
12: operation unit
13: display unit
14: storage unit
20: memory
21: screen switching setting unit
22: screen switching output unit
30: storage
31: analysis result
32: consumable status
33: screen switching setting information
41: basic display region
42: specific display region
50: setting completion list
100: automatic analyzer
100a: first automatic analyzer
100b: second automatic analyzer
100c: third automatic analyzer
200: terminal device

## Claims

1. An automatic analyzer comprising:
an analysis unit configured to perform analysis;
a storage unit configured to store analysis information including an analysis result or a consumable status;
a display unit configured to display the analysis information;
an operation unit configured to receive an operation from a user; and
a control unit configured to control the analysis unit, the storage unit, the display unit, and the operation unit, wherein
the storage unit stores a screen switching pattern including a plurality of screens related to the analysis information and a trigger condition serving as a trigger for the screen switching pattern, the screen switching pattern and the trigger condition being determined by the operation unit in advance, and
when the trigger condition is satisfied, the control unit automatically starts switching of a screen to be displayed on the display unit according to the screen switching pattern stored in the storage unit regardless of the operation of the user on the operation unit.

2. The automatic analyzer according to claim 1, wherein
the trigger condition is at least one of a condition indicating that the automatic analyzer is in a predetermined state, a condition indicating that a specimen is moved to a predetermined position, a condition indicating that a user moves to a predetermined position, a condition indicating that a predetermined screen is displayed, and a condition indicating that there is no operation on the operation unit for a predetermined time or more.

3. The automatic analyzer according to claim 1, wherein
the display unit displays a specific display region that is a screen switching target and a basic display region serving as a screen that does not change even when a screen of the specific display region is switched.

4. The automatic analyzer according to claim 3, wherein
the specific display region is larger than the basic display region.

5. The automatic analyzer according to claim 1, wherein
when a predetermined operation is performed by the operation unit after screen switching is started, a screen displayed at that time is fixed, and
when a lock time predetermined by the operation unit elapses, the screen switching is resumed.

6. The automatic analyzer according to claim 1, wherein
the trigger condition is a condition indicating that the automatic analyzer is in a predetermined state, and
the control unit causes the display unit to display a screen related to the consumable status when the automatic analyzer is in a preparation state.

7. The automatic analyzer according to claim 1, wherein
the trigger condition is a condition indicating that a specimen is moved to a predetermined position, and
a specimen type, a specimen position, and a screen displayed when the specimen of the specimen type is moved to the specimen position are determined in advance as the screen switching pattern.

8. The automatic analyzer according to claim 1, wherein
the analysis unit includes a plurality of analysis modules, the trigger condition is a condition indicating that a user moves to a predetermined position, and
when the user moves to a position in front of a predetermined analysis module, the control unit causes the display unit to display a screen related to the consumable status of the analysis module.

9. The automatic analyzer according to claim 1, wherein
the trigger condition is a condition indicating that a predetermined screen is displayed or a condition indicating that there is no operation on the operation unit for a predetermined time or more, and
an order of a plurality of screens to be displayed and a switching time of each screen are determined as the screen switching pattern.

10. An automatic analysis system comprising:
a plurality of automatic analyzers; and
a terminal device coupled to the plurality of automatic analyzers, wherein
the terminal device includes
a storage unit configured to store analysis information that is acquired from the plurality of automatic analyzers and includes an analysis result or a consumable status,
a display unit configured to display the analysis information,
an operation unit configured to receive an operation from a user, and
a control unit configured to control the storage unit, the display unit, and the operation unit,
the storage unit stores a screen switching pattern including a plurality of screens related to the analysis information and a trigger condition serving as a trigger for the screen switching pattern, the screen switching pattern and the trigger condition being determined by the operation unit in advance, and
when the trigger condition is satisfied, the control unit automatically starts switching of a screen to be displayed on the display unit according to the screen switching pattern stored in the storage unit regardless of the operation of the user on the operation unit.

11. An analysis information screen switching program for causing a computer included in an automatic analyzer or a computer coupled to the automatic analyzer to execute:
a step of determining a screen switching pattern including a plurality of screens related to analysis information including an analysis result or a consumable status, and a trigger condition serving as a trigger for the screen switching pattern; and
a step of automatically starting screen switching according to the screen switching pattern regardless of an operation of a user when the trigger condition is satisfied.
